# EUROPÄISCHE PATENTANMELDUNG

(11) **EP 0 552 435 A2**
(43) Veröffentlichungstag der Anmeldung: **28.07.1993**
(21) Anmeldenummer: 92119543.4
(22) Anmeldetag: 16.11.1992
(51) Int. Cl.: B60G 17/015

(54) **Verfahren und Vorrichtung zur Erzeugung eines Signals zur Ansteuerung eines Fahrwerkregelungssystems**

(30) Priorität: 19.12.1991 DE 4141931
(71) Anmelder: ROBERT BOSCH GMBH, 70442 Stuttgart (DE)
(72) Erfinder: Miller, Bernhard, W-7000 Stuttgart 40 (DE); Gorny, Stefan, Dipl.-Ing., W-7141 Schwieberdingen (DE); Hachtel, Jürgen, Dipl.-Ing., W-7141 Erdmannhausen (DE)

(57) **Zusammenfassung**

Bei dem erfindungsgemäßen Verfahren zur Erzeugung eines Signals zur Ansteuerung eines Fahrwerkregelungssystems bei Kraftfahrzeugen werden erste Signale erfaßt, die die Drehzahl wenigstens eines Rades repräsentieren. Ausgehend von diesen ersten Signalen werden zweite Signale ermittelt, die die mittlere Drehzahl wenigstens eines Rades wenigstens eine Achse repräsentieren. Zur Ansteuerung eines Fahrwerkregelungssystems werden nun dritte Signale herangezogen, zu deren Bildung die Differenz der ersten Signale zu den zweiten Signalen ermittelt wird. Hierbei repräsentieren die dritten Signale die dynamische Radlast an dem jeweiligen Rad. Durch das erfindungsgemäße Verfahren wird also die dynamische Radlast mittels der Raddrehzahlsignale ermittelt. Diese Raddrehzahlsignale sind in Fahrzeugen mit einem Antiblockiersystem (ABS) und/oder mit einem Antriebsschlupfsystem (ASR) bereits vorhanden.

## Beschreibung

### Stand der Technik

Die Erfindung geht aus von einer Einrichtung nach Gattung des Hauptanspruchs.

Wesentlich für die Ausgestaltung des Fahrwerks eines Kraftfahrzeugs ist ein leistungsfähiges Federungs- und/oder Dämpfungssystem. Hierbei ist zum einen der Fahrsicherheit Rechnung zu tragen und zum anderen ist es erstrebenswert, den Insassen und einer stoßempfindlichen Zuladung des Fahrzeugs einen möglichst hohen Reisekomfort zu ermöglichen. Dies sind aus der Sicht des Federungs- und/oder Dämpfungssystems sich widerstrebende Zielsetzungen. Ein hoher Reisekomfort ist durch eine möglichst weiche Fahrwerkeinstellung zu erreichen, während hinsichtlich einer hohen Fahrsicherheit eine möglichst harte Fahrwerkeinstellung erwünscht ist.

Um diesen Zielkonflikt zu lösen, geht man von dem bisher noch überwiegend benutzten passiven über zu regelbaren (aktiven) Fahrwerken. Ein passives Fahrwerk wird, je nach prognostiziertem Gebrauch des Fahrzeuges, beim Einbau entweder tendenziell hart ("sportlich") oder tendenziell weich ("komfortabel") ausgelegt. Eine Einflußnahme auf die Fahrwerkcharakteristik ist während des Fahrbetriebs bei diesen Systemen nicht möglich. Bei aktiven Fahrwerken hingegen kann die Charakteristik des Federungs- und/oder Dämpfungssystems während des Fahrbetriebs je nach Fahrzustand beeinflußt werden.

In der DE-OS 38 27 737 wird der oben genannte Zielkonflikt zwischen Fahrsicherheit und Fahrkomfort dadurch gelöst, daß ein aktives oder schaltbares Fahrwerk bei sich ändernden Betriebsbedingungen, zum Beispiel sich ändernde Fahrbahnbeschaffenheit, unter Veränderung des Fahrkomforts so angesteuert wird, daß die Fahrsicherheit stets gewährleistet ist. Als Bewertungskriterium für die Fahrsicherheit wird der Effektivwert der Radlastschwankungen während des Fahrbetriebs herangezogen. Unter der Radlastschwankung versteht man die Abweichung der Radlast (Normalkraft zwischen Reifen und Fahrbahn) von ihrem statischen Wert. Die Radlastschwankung (wie auch die Radlast selbst) ist aber einer direkten Messung nur sehr schwer zugänglich, da Meßwertaufnehmer zwischen dem Rad bzw. dem Reifen und der Fahrbahn angebracht werden müßten. Die Messung des Federweges ist dagegen relativ einfach und kostengünstig zu realisieren. Als Federweg bezeichnet man die Relativverschiebung des Fahrzeugaufbaus relativ zum Rad. In der DE-OS 38 27 737 wird der Federweg als Ersatzgröße für die Radlastschwankung gemessen. Aus diesen Meßwerten werden der gleitende Effektivwert und der gleitende Mittelwert für die Ersatzgröße sowie deren Differenz gebildet. Nachdem diese Differenz mit einem vorgegebenen Sollwert verglichen worden ist, wird bei Überschreitung des Sollwertes ein elektrisches Anzeige- und/oder Steuersignal zur Steuerung/Regelung des Fahrwerks abgegeben.

In der deutschen Patentanmeldung mit dem Aktenzeichen P 41 07 090.9 wird, ausgehend von Signalen, die die relativen Bewegungen zwischen den Radeinheiten und dem Aufbau des Fahrzeugs repräsentieren, auf die aktuelle Radlastschwankung geschlossen. Weiterhin werden mögliche Änderungen der aktuellen Radlastschwankung als Funktion einer möglichen Änderungen der Fahrwerkcharakteristik vorausberechnet, woraufhin durch Abfrage gewisser Kriterien bestimmt wird, ob eine für die Fahrsicherheit kritische Situation vorliegt und ob im Falle einer für die Fahrsicherheit kritischen Situation zur Minimierung der Radlastschwankungen die Fahrwerkcharakteristik zu verstellen ist.

Der obengenannte Stand der Technik zeigt, daß die Kenntnis der Radlast wesentlich ist für die Ausgestaltung eines Fahrwerkregelungssystems.

Aufgabe der vorliegenden Erfindung ist die Erfassung der Radlast mit einem möglichst geringen Aufwand hinsichtlich der benötigten Sensorik.

### Vorteile der Erfindung

Bei dem erfindungsgemäßen Verfahren zur Erzeugung eines Signals zur Ansteuerung eines Fahrwerkregelungssystems bei Kraftfahrzeugen werden erste Signale erfaßt, die die Drehzahl wenigstens eines Rades repräsentieren. Ausgehend von diesen ersten Signalen werden zweite Signale ermittelt, die die mittlere Drehzahl wenigstens eines Rades wenigstens einer Achse repräsentieren. Zur Ansteuerung eines Fahrwerkregelungssystems werden nun dritte Signale herangezogen, zu deren Bildung die Differenz der ersten Signale zu den zweiten Signalen ermittelt wird. Hierbei repräsentieren die dritten Signale die dynamische Radlast an dem jeweiligen Rad.

Durch das erfindungsgemäße Verfahren wird also die dynamische Radlast mittels der Raddrehzahlsignale ermittelt. Diese Raddrehzahlsignale sind in Fahrzeugen mit einem Antiblockiersystem (ABS) und/oder mit einem Antriebsschlupfsystem (ASR) bereits vorhanden.

Die Einfederung des Reifens nimmt weitgehend linear mit der Vergroßerung der Radkraft zu. Damit verkleinert sich der Radhalbmesser des Rades zur Fahrbahn. Die Reifendämpfung ist dabei im Vergleich zur Dämpfung des Rades (bzw. der Achsseite) durch den eingebauten Stoßdämpfer sehr gering. Da während einer Einfederung des Reifens durch Fahrbahnunebenheiten oder Radschwingungen (Wheelhopeffekt) die Fahrgeschwindigkeit des Aufbaus als konstant angenommen werden kann, ergibt sich zwangsweise, daß sich mit einer Veränderung des Radradius die Winkelgeschwindigkeit des Rades und somit die Frequenz des Raddrehzahlsignals verändert.

Ermittelt man nun die Abweichung der momentanen Drehzahl eines einzelnen Rades zu der mittleren Drehzahl dieses Rades oder mehrerer Räder, so gelangt man hierdurch zu einer Größe, die die momentane Radlast an diesem Rad repräsentiert. Das erfaßte Raddrehzahlsignal (Frequenz oder Periodendauer) wird hierzu in einem Filter bearbeitet, der tiefpaßartiges Verhalten aufweist. Anschließend wird das so erfaßte Raddrehzahlsignal von seinem ungefilterten Wert subtrahiert. Als Ergebnis erhält man eine Größe, die den dynamischen Radlastschwankungen proportional ist.

Zur Mittelwertbildung durch das tiefpaßartige Filter können auch die Drehzahlen mehrerer Räder oder der Mittelwert der Drehzahlen mehrerer Räder herangezogen werden. Hierbei müssen gegebenenfalls Störgrößen, wie unterschiedliche Reifenluftdrücke und/oder eine vorliegende Kurvenfahrt, berücksichtigt werden.

Ein besonderer Vorteil ergibt sich in der doppelten Nutzung bereits vorhandender Geber, da bei Fahrzeugen mit einem Antiblockiersystem (ABS) und/oder einem Antriebsschlupfsystem (ASR) die Raddrehzahlsignale bzw. die entsprechende Sensorik vorhanden ist.

Die, wie oben beschrieben, erlangten dritten Signale werden zur Steuerung und/oder Regelung eines Fahrwerkregelungssystems herangezogen.

Insbesondere repräsentieren die dritten Signale der dynamischen Radlastschwankungen den Fahrzustand des Fahrzeugs hinsichtlich der Fahrsicherheit. Wie im Stand der Technik beschrieben, können Fahrwerkregelungsstrategien abhängig von der Größe der Radlastschwankungen gewählt werden. Insbesondere wird bei größeren Radlastschwankungen die Strategie verfolgt, die Radlastschwankungen zu minimieren.

Weiterhin betrifft die Erfindung eine Vorrichtung zur Durchführung des oben beschriebenen Verfahrens. Hierzu sind erste Mittel zur Erfassung der ersten Signale, die die Drehzahl wenigstens eines Rades repräsentieren, und zweite Mittel, die ausgehend von den ersten Signalen zweite Signale ermitteln, die die mittlere Drehzahl wenigstens eines Rades wenigstens einer Achse repräsentieren, vorgesehen. Durch dritte Mittel werden die Abweichungen der ersten Signale zu den zweiten Signalen ermittelt.

Bei einem erfindungsgemäßen Fahrwerkregelungssystem für Kraftfahrzeuge sind Aufhängungssysteme zwischen dem Fahrzeugaufbau und den Rädern angebracht, die zur Aufbringung von Kräften zwischen dem Aufbau und den Rädern angesteuert werden. Es sind Mittel vorgesehen, mit denen ausgehend von den Drehzahlen wenigstens eines Rades Ansteuerungen wenigstens eines Aufhängungssystems getätigt werden.

Ein besonderer Vorteil des erfindungsgemäßen Verfahrens bzw. der Vorrichtung besteht darin, daß rechenzeitintensive Berechnungen der dynamischen Radlast aus den Signalen von Einfederwegsensoren und/oder vertikaler Aufbaubeschleunigungssensoren ersetzt werden durch eine einfache Bearbeitung der Raddrehzahlsignale.

### Zeichnungen

Ausführungsbeispiele der Erfindung sind in den Zeichnungen dargestellt und werden in der nachfolgenden Beschreibung näher erläutert.

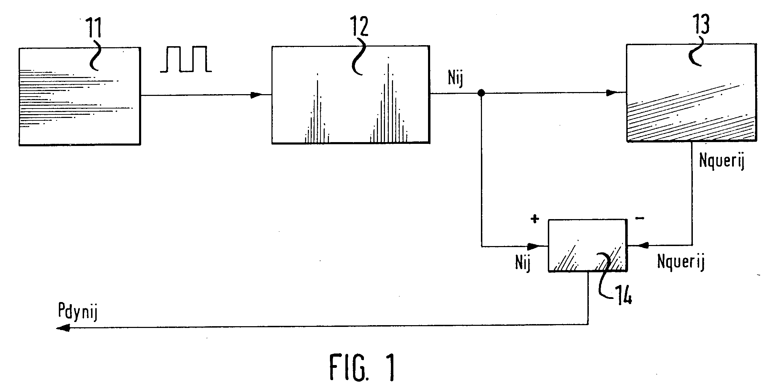

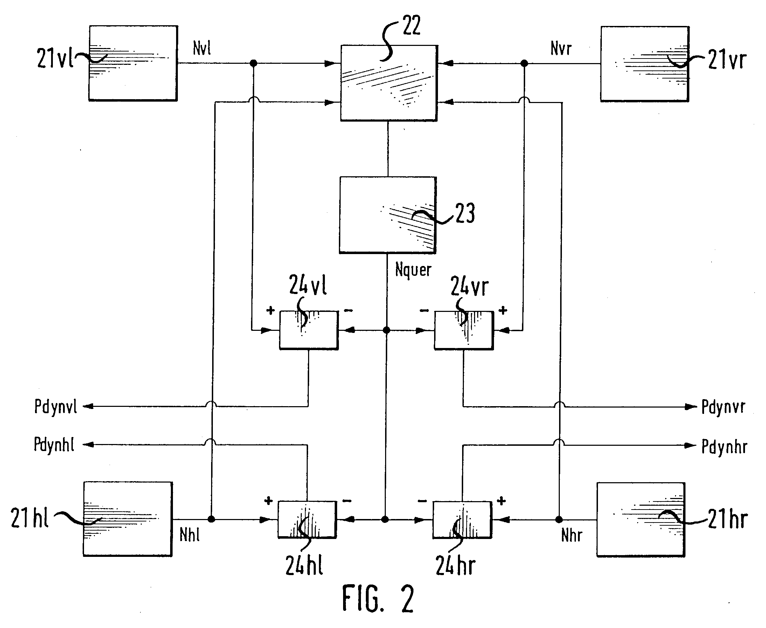

Die Blockschaltbilder der Figur 1 und 2 zeigen verschiedene Ausführungsbeispiele des erfindungsgemäßen Verfahrens bzw. der Vorrichtung.

### Beschreibung des Ausführungsbeispiels

In der Figur 1 sind mit den Bezugszeichen 11 und 12 erste Mittel zur Erfassung der ersten Signale Nij gekennzeichnet. Mit dem Bezugszeichen 13 sind zweite Mittel dargestellt, die als Filter mit tiefpaßartigem Übertragungsverhalten ausgebildet sind. Dritte Mittel zur Ermittlung der Abweichung der ersten Signale Nij zu den zweiten Signalen Nquer haben das Bezugszeichen 14.

In der Figur 2 bezeichnen die Positionen 21vl, 21vr, 21hl und 21hr erste Mittel zur Erfassung der ersten Signale Nij. Im folgenden ist mit dem Index i die Achse [i=v (vorne) bzw. i=h (hinten)] und mit dem Index j das Rad [j=r (rechts) bzw. j=l (links)] bezeichnet. Die Position 22 stellt vierte Mittel zur Mittelwertbildung dar. Die Position 23 zeigt zweite Mittel mit tiefpaßartigem Übertragungsverhalten. Mit dem Bezugszeichen 24vl, 24vr, 24hl und 24hr sind dritte Mittel zur Ermittlung der Abweichung der ersten Signale Nij zu den zweiten Signalen Nquerij gekennzeichnet.

In dem ersten Ausführungsbeispiel wird die Drehzahl eines Rades durch einen Geber 11 erfaßt. Solche Geber 11 können beispielsweise derart gestaltet sein, daß an den Radeinheiten zentrisch zu den Radachsen metallische Scheiben angeordnet sind, deren Ränder gleichgroße äquidistante Aussparungen aufzeigen. Eine realistische Zahl der Aussparungen beträgt beispielsweise 48 oder 96. Durch Abtasten dieser Zahnräder, beispielsweise durch induktive Sensoren, und einer ersten Signalaufbereitung zur Formung der Sensorsignale bzw. zur Eliminierung von Steuersignalen erhält man pro Zahn bzw. pro Vertiefung des Zahnrades beispielsweise ein Rechtecksignal. Solch ein Rechtecksignal ist schematisch ausgangsseitig der Mittel 11 in der Figur 1 zu sehen. In den Mitteln 12 kann nun die Frequenz und/oder die Periodendauer dieses Rechtecksignals ermittelt werden. In diesem Ausführungsbeispiel soll ausgangsseitig der Mittel 12 das Signal Nij anliegen, das die Drehzahl des Rades repräsentiert. Dieses erste Signal Nij wird nun zweiten Mitteln 13 bereits hinzugeführt. Durch die Verarbeitung in den zweiten Mitteln 13, die als Tiefpaß ausgebildet sind, entsteht als zeitliches Mittel der ersten Signale Nij das Signal Nquerij. Werden nun die ersten Signale Nij mit positivem Vorzeichen und die zweiten Signale Nquerij mit negativem Vorzeichen den dritten Mitteln 14, die als Additionseinheit ausgebildet sind, zugeführt, so liegt ausgangsseitig der dritten Mittel 14 das dritte Signal Pdynij an, das die Abweichung der ersten Signale Nij zu den zweiten Signalen Nquerij repräsentiert. Dieses dritte Signal Pdynij ist proportional zur Radlast des betrachteten Rades und wird zur Ansteuerung der nicht dargestellten Aufhängungssysteme herangezogen. Das erfindungsgemäße Verfahren bzw. die Vorrichtung, wie sie anhand der Figur 1 dargestellt ist, kann an jeder Radeinheit des Fahrzeugs angewendet werden.

Werden zur Erfassung der Raddrehzahlen beispielsweise, wie oben beschrieben, 48 Zähne verwendet, so ergibt sich bezogen auf den Abrollweg des Rades eine mögliche Messwiederholung alle 4 cm. Damit kann eine ausreichend genaue Messwerterfassung und Auswertung im gewünschten Frequenzbereich sichergestellt werden.

In dem zweiten Ausführungsbeispiel, das in der Figur 2 zu sehen ist, werden zur Bildung des zeitlichen Mittelwertes der Raddrehzahlen die Mittelwerte aller Räder des Fahrzeugs herangezogen.

Hierbei entsprechen die Mittel 21ij den oben beschriebenen ersten Mitteln 11 und 12. Die ersten Signale Nij, die die Drehzahlen der Räder repräsentieren, werden vierten Mitteln 22 zur Mittelwertbildung zugeführt. Das Ausgangssignal der vierten Mittel 22 repräsentiert also den Mittelwert der Raddrehzahlen aller vier Räder. Dieser Mittelwert wird den zweiten Mitteln 23 zugeführt, die als Tiefpaß ausgebildet sind. Ausgangsseitig der zweiten Mittel 23 liegen die zweiten Signale Nquer, die den dritten Mitteln 24ij mit negativem Vorzeichen zugeführt werden. Weiterhin werden den dritten Mitteln 24ij die ersten Signale Nij einer jeden Radeinheit mit positivem Vorzeichen zugeführt. Die dritten Mittel 24ij sind als Addiereinheiten ausgebildet, wodurch ausgangseitig der dritten Mittel 24ij die Abweichungen der ersten Signale Nij einer jeden Radeinheit zu dem zweiten Signal Nquer anstehen. Diese Abweichungen sind in der Figur 2 als dritte Signale Pdynij bezeichnet und repräsentieren die momentane Radlast an den entsprechenden Radeinheiten. Auf diese werden zur Ansteuerung von nicht dargestellten Aufhängungssystemen zwischen Fahrzeugaufbau und den Rädern herangezogen.

Bei der Verwendung des erfindungsgmäßen Verfahrens bzw. der Vorrichtung im Rahmen des zweiten Ausführungsbeispiels ist darauf zu achten, daß bei der Mittelwertbildung der ersten Signale Nij der Raddrehzahlen Offsetfehler bedingt durch mittlere Absolutfrequenzunterschiede (Reifendruckdifferenzen, Kurvenfahrt usw.) nicht störend wirken. Gegebenenfalls müssen diese Offsetfehler im Rahmen der Mittelwertbildung berücksichtigt werden.

## Patentansprüche

1. Verfahren zur Erzeugung eines Signals zur Ansteuerung eines Fahrwerkregelungssystems bei Kraftfahrzeugen, wobei
- ersten Signale (Nij) erfaßt werden, die die Drehzahl wenigstens eines Rades repräsentieren, und
- ausgehend von den ersten Signalen (Nij) zweite Signale (Nquerij) ermittelt werden, die die mittlere Drehzahl wenigstens eines Rades wenigstens einer Achse repräsentieren, und
- zur Bildung dritter Signale (Pdynij) zur Ansteuerung eines Fahrwerkregelungssystems die Differenz der ersten Signale (Nij) zu den zweiten Signalen (Nquerij) herangezogen wird.

2. Verfahren nach Anspruch 1, dadurch gekennzeichnet, daß die Ermittelung der zweiten Signale (Nquerij) durch eine Filterung der ersten Signale (Nij) geschieht, wobei die Filterung ein tiefpaßartiges Verhalten aufweist.

3. Verfahren nach wenigstens einem der vorhergehenden Ansprüche, dadurch gekennzeichnet, daß die ersten Signale (Nij) mittelbar oder unmittelbar aus den Raddrehzahlsignalen ermittelt werden, die zur Steuerung und/oder Regelung eines Antiblockiersystems (ABS) und/oder eines Antriebsschlupfsystem (ASR) verwendet werden oder die ersten Signale (Nij) zusätzlich zur Steuerung und/oder Regelung eines Antiblockiersystems (ABS) und/oder eines Antriebsschlupfsystem (ASR) verwendet werden.

4. Verfahren nach wenigstens einem der vorhergehenden Ansprüche, dadurch gekennzeichnet, daß bei der Bildung der zweiten Signale (Nquerij) aus den ersten Signalen (Nij) wenigstens zweier Räder einer Achse Störgrößen, wie unterschiedliche Reifenluftdrücke und/oder eine vorliegende Kurvenfahrt, berücksichtigt werden.

5. Verfahren nach wenigstens einem der vorhergehenden Ansprüche, dadurch gekennzeichnet, daß die dritten Signale (Pdynij) zur Regelung und/oder Steuerung eines Fahrwerkregelungssystems im Sinne einer Minimierung der dynamischen Radlastschwankungen herangezogen werden.

6. Vorrichtung zur Durchführung des Verfahrens nach Anspruch 1, dadurch gekennzeichnet, daß vorgesehen sind
- erste Mittel (11, 12, 21) zur Erfassung der ersten Signale (Nij), die die Drehzahl wenigstens eines Rades repräsentieren, und
- zweite Mittel (13, 23), die ausgehend von den ersten Signalen (Nij) und/oder ausgehend von dem in vierten Mitteln (22) gebildeten Mittelwert der ersten Signale (Nij) zweite Signale (Nquerij) ermitteln, die die mittlere Drehzahl wenigstens eines Rades wenigstens einer Achse repräsentieren, und
- dritte Mittel (14, 24ij) zur Ermittelung der Abweichung der ersten Signale (Nij) zu den zweiten Signalen (Nquerij).

7. Vorrichtung nach Anspruch 6, dadurch gekennzeichnet, daß die zweiten Mittel (13, 22) ein tiefpaßartiges Übertragungsverhalten aufweisen.

8. Vorrichtung nach Anspruch 6, dadurch gekennzeichnet, daß die dritten Mittel (14, 24ij) als Subtrahierer und/oder als Addierer ausgebildet sind.

9. Fahrwerkregelungssystem für Kraftfahrzeuge mit Aufhängungssystemen zwischen Fahrzeugaufbau und den Rädern, die zur Aufbringung von Kräften zwischen dem Aufbau den Rädern angesteuert werden, dadurch gekennzeichnet, daß Mittel vorgesehen sind, mit denen ausgehend von den Drehzahlen wenigstens eines Rades Ansteuerungen wenigstens eines Aufhängungssystems getätigt werden.
